# EUROPÄISCHE PATENTSCHRIFT

(11) **EP 1 045 779 B1**
(45) Veröffentlichungstag und Bekanntmachung des Hinweises auf die Patenterteilung: **09.02.2005**
(21) Anmeldenummer: 99955696.2
(22) Anmeldetag: 15.09.1999
(51) Int. Cl.: B60S 1/08, G01N 21/55, G01N 21/77

(54) **OPTISCHER SENSOR**
OPTICAL SENSOR
DETECTEUR OPTIQUE

(30) Priorität: 15.09.1998 DE 19842063; 14.09.1999 DE 19943887
(43) Veröffentlichungstag der Anmeldung: 25.10.2000
(73) Patentinhaber: ROBERT BOSCH GMBH, 70442 Stuttgart (DE)
(72) Erfinder: MUELLER-FIEDLER, Roland, D-71229 Leonberg (DE); SAUTTER, Helmut, D-71254 Ditzingen (DE); BERNHARD, Winfried, D-70839 Gerlingen (DE); MUELLER, Andre, D-70839 Gerlingen (DE); MUELLER, Lutz, D-70839 Gerlingen (DE); SCHINK, Rainer, D-71229 Leonberg (DE)
(86) Internationale Anmeldenummer: PCT/DE1999/002916
(87) Internationale Veröffentlichungsnummer: WO 2000/015478

(56) Entgegenhaltungen:
- EP-A- 0 562 275
- EP-A- 0 869 043
- WO-A-91/10122
- DE-A- 4 224 435
- DE-C- 4 102 146
- FR-A- 2 672 127
- US-A- 3 947 131
- US-A- 4 661 320
- US-A- 5 565 978
- US-A- 5 747 348

## Beschreibung

Die Erfindung betrifft einen optischen Sensor zur Erfassung einer Benetzung auf einer Oberfläche mit den im Oberbegriff des Anspruchs 1 genannten Merkmalen.

### Stand der Technik

Optische Sensoren der gattungsgemäßen Art sind beispielsweise aus EP-A-562 275 bekannt. Diese dienen beispielsweise der Steuerung einer Licht- und/oder Scheibenwischanlage von Kraftfahrzeugen. Hierbei erfolgt eine Meßwerterfassung im wesentlichen nach einem optoelektronischen Prinzip. Dabei wird Licht aus dem sichtbaren Bereich oder dem Infrarotbereich von der Innenseite der Windschutzscheibe in diese eingekoppelt. An der nicht benetzten Außenfläche wird das Licht reflektiert und gelangt zu einem Empfänger. Um den Wirkungsgrad zu erhöhen, erfolgt die Einstrahlung so, daß an der Außenseite Totalreflexion erfolgt. Durch die Benetzung der Außenfläche mit Wasser wird die Totalreflexion gestört. Allen bekannten Lösungen ist gemeinsam, daß die Ein- und Auskopplung der elektromagnetischen Wellen an räumlich deutlich voneinander getrennten Stellen erfolgt und daß das Sensorelement und die Auswerteelektronik in einem gemeinsamen Gehäuse untergebracht sind.

Eine fehlerfreie Signalerfassung kann dabei nur erfolgen, wenn der optische Sensor in einem Bereich der Windschutzscheibe angebracht ist, der durch die Scheibenwischanlage gereinigt wird. Deshalb muß der Sensor bei manchen Fahrzeugtypen im Abstand von bis zu 15 cm vom oberen Rand der Windschutzscheibe angebracht werden. Nachteilig ist hierbei, daß das Sensorgehäuse in diesen Fällen ins Blickfeld des Fahrers gelangt und aufgrund seiner mangelnden Transparenz als störend empfunden wird. Eine Miniaturisierung ist nicht möglich, da zur rechtzeitigen Detektion einer Benetzung, beispielsweise durch einsetzenden Regen, ein Sensorbereich von zirka 4 bis 5 cm² notwendig ist.

### Vorteile der Erfindung

Der erfindungsgemäße optische Sensor mit den Merkmalen des Hauptanspruchs hat insbesondere den Vorteil, daß der Sensorbereich nicht unmittelbar bei der Auswerteelektronik angeordnet werden muß. Dadurch, daß das Licht zwischen dem wenigstens einen Sender und dem wenigstens einen Empfänger bidirektional über ein lichtführendes Element zu dem Sensorbereich geführt wird, wobei im Sensorbereich ein Retroreflektor angeordnet ist, kann der Sensorbereich entfernt von dem Sender beziehungsweise Empfänger angeordnet werden. Die Reflexion des Sensorsignals erfolgt an dem Retroreflektcr, der vorzugsweise aus einem transparenten Material geformt ist. Die aus technischen Gründen nicht aus einem transparenten Material herstellbaren Sensorbestandteile, insbesondere der Sender und der Empfänger, können nun, bei einer bevorzugten Anwendung als Regensensor, außerhalb des Blickfeldes des Fahrers angeordnet werden. Damit kann das optische Erscheinungsbild des Sensors, insbesondere bei dessen Einsatz als Regensensor in Kraftfahrzeugen, unauffälliger gestaltet werden. Ferner ergibt sich ein gemeinsamer Einkoppel- beziehungsweise Auskoppelpunkt des Lichts.

Vorteilhafte Ausführungsformen für das lichtführende Element sind mono- oder multimodige Lichtwellenleiter aus Glas oder Kunststoff, einzeln oder in gebündelter Form. Des weiteren Platten oder geeignete geformte Körper aus Glas oder Kunststoff, die so geformt sind, daß sie Licht führen können. Zur Optimierung der Lichtführung ist es dabei vorteilhaft, eine Beschichtung auf das lichtführende Element aufzubringen, die einen um mindestens einige Prozent geringeren Brechungsindex als das lichtführende Element besitzt. Dadurch findet die zur Lichtführung notwendige Totalreflexion nicht an der Oberfläche des lichtführenden Elementes, sondern an der Grenzfläche zwischen der Beschichtung und dem Kernmaterial des lichtführenden Elementes statt. Ferner kann die Zu- und Rückführung des Lichts über einen gemeinsamen oder über getrennte Lichtleiter, die neben- oder übereinander angeordnet sind, erfolgen.

Für die Einkopplung des Lichtstrahls vom lichtführenden Element in die Windschutzscheibe und umgekehrt ist ein Koppelelement vorgesehen, das vorzugsweise auch einteilig mit dem lichtführenden Element ausgebildet sein kann. Dabei wird der Lichtstrahl derart umgelenkt, daß dieser mindestens mit dem Grenzwinkel der Totalreflexion auf die Grenzfläche der Oberfläche trifft. Vorteilhafte Ausführungsformen können dabei Krümmer, Prisma oder eine aufgerauhte Unterseite des lichtführenden Elementes sein.

Die Reflexion des Lichtstrahls erfolgt vorteilhafterweise über prismatische Reflektoren. Diese können bevorzugt als Mikrostrukturen mit Abmessungen zwischen 2 µm und 100 µm in Kreissegmenten oder in Streifen angeordnet sein. Anstelle eines prismatischen Reflektors ist auch ein reflektierender Farbstoff oder in Kunststoff eingelagerte Glaskugeln einsetzbar. Ist eine Transparenz nicht erforderlich, können die Prismen bevorzugterweise durch Spiegelflächen ersetzt werden, insbesondere durch Hohlspiegelsegmente, die den Lichtstrahl auf den Auskoppelpunkt fokussieren.

Des weiteren kann die Reflexion über ein Hologramm realisiert werden, das auf die Scheibe aufgebracht wird oder beispielsweise in Form einer Folie in die Windschutzscheibe eingeklebt wird. Dadurch ergibt sich ein mechanischer Schutz des Hologramms und die Windschutzscheibe muß an der Innenfläche nicht beklebt werden. Außerdem kann die Hologrammfolie an der Oberfläche der Windschutzscheibe keine Lichtreflexionen verursachen, wodurch sie für den Fahrer weniger sichtbar und damit weniger störend ist.

Eine weitere Möglichkeit besteht darin, die in der Windschutzscheibe angeordnete Klebefolie in einem geeigneten Bereich selbst als Hologrammfolie auszubilden. Besonders vorteilhaft ist weiterhin, daß das vorliegende Sensorprinzip in leicht abgewandelter Form für den Nachweis von verschiedenartigen Meßsubstanzen, als Flüssigkeit, Aerosol, in Lösung oder in gasförmiger Form, verwendet werden kann. Hierbei wird in dem Sensorbereich eine Substanz aufgebracht, die in Gegenwart der Meßsubstanz mit einer Änderung der Brechzahl oder der Farbe reagiert. Die hieraus resultierende Brechung, Absorption oder Reflexion des Lichtstrahls im Sensorbereich führt zu einer Signaländerung, die im Empfänger registriert werden kann. In dieser Ausführungsform können Retroreflektor und der Träger der sensitiven Substanz bevorzugt als eine Baueinheit ausgebildet werden.

Weiterhin ist vorteilhaft, daß durch die räumliche Trennung von Elektronik und Retroreflektor ein schädigender Einfluß der Meßsubstanz auf die Bauelemente der Elektronik vermieden werden kann, da der Kontakt mit der Meßsubstanz hierbei nur über den Sensorbereich erfolgt. Das Material des Trägers kann bevorzugterweise Glas oder ein transparenter Kunststoff sein. Wesentlich dabei ist, daß dieser Körper eine Fläche aufweist, an der es zur Totalreflexion kommt.

Die erfindungsgemäße Konstruktion ermöglicht es, daß im Bereich der primären Meßwerterfassung deutlich weniger Bauelemente vorhanden sein müssen. Daher ist auch eine größere Variationsbreite der Senserenform und Baugröße gegeben.

Weitere bevorzugte Ausgestaltungen ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine schematische Gesamtansicht der Anordnung eines optischen Sensors an der Windschutzscheibe eines Kraftfahrzeugs;
- Figur 2: eine Detailvergrößerung gemäß Figur 1;
- Figur 3: eine weitere Anwendung des optischen Sensors;
- Figuren 4a bis 4c: verschiedene Ausführungen eines Koppelelementes;
- Figuren 5a und 5b: verschiedene Ausführungen eines Prismen-Retroreflektors;
- Figuren 6a bis 6d: verschiedene Ausführungen des Retroreflektors und
- Figuren 7a und 7b: verschiedene Ausführungen des Lichtleiters.
- Figuren 8a und 8b: Schnitt und Draufsicht auf eine Windschutzscheibe im Sensorbereich.

### Beschreibung der Ausführungsbeispiele

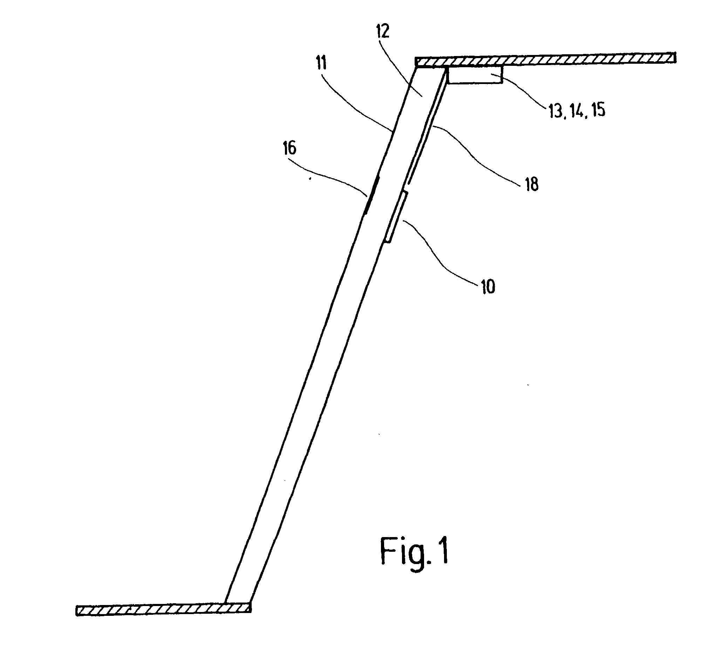

Figur 1 zeigt in einer schematischen Gesamtansicht die Anordnung eines optischen Sensors an einer Windschutzscheibe 12 eines Kraftfahrzeugs. Hierbei sind ein Retroreflektor 10 und ein lichtführendes Element 18 an der Innenseite der Windschutzscheibe 12 beispielsweise durch Klebung montiert. Die Oberfläche 11 der Außenseite der Windschutzscheibe 12, an der in noch zu erläuternder Weise Licht reflektiert wird, definiert einen Sensorbereich 16. Ein Gehäuse 14 für eine Elektronik, die wenigstens einen Sender 13 und wenigstens einen Empfänger 15 umfaßt, befindet sich räumlich entfernt von dem Retroreflektor 10 und ist damit dem Blickfeld eines Fahrers entzogen. Die Elektronik ist beispielsweise in dem Fuß eines Innenrückblickspiegels integriert.

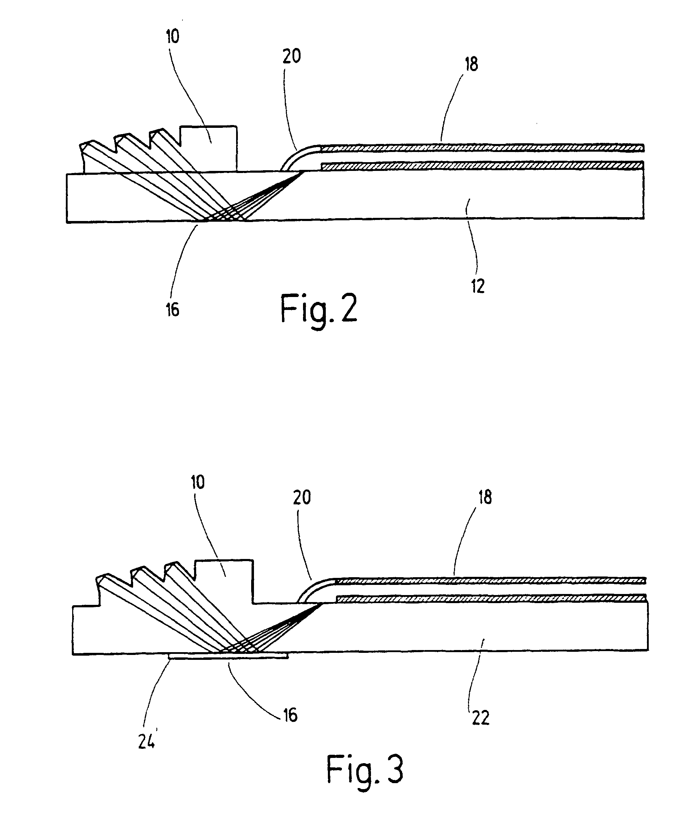

Figur 2 zeigt in einer schematischen Teilschnittansicht den optischen Sensor als Regensensor an der Windschutzscheibe 12 eines Kraftfahrzeugs. Die Elemente des Sensors, das lichtführende Element 18 und der Retroreflektor 10, sind an der Innenseite der Windschutzscheibe 12 angebracht. Das lichtführende Element 18 leitet hierbei das Licht, das von dem wenigstens einen Sender erzeugt wird, über ein Koppelelement 20, wobei dort das Licht derart umgelenkt wird, daß mindestens der Grenzwinkel der Totalreflexion an der äußeren Glasgrenzfläche erreicht wird. Das Licht wird dann über den prismatischen Retroreflektor 10 und über die äußere Oberfläche 11 der Scheibe 12 zurückgeführt und tritt wiederum über das Koppelelement 20 in das lichtführende Element 18 ein und wird von diesem zu dem wenigstens einen Empfänger 15 geführt. Ist der Sensorbereich 16 mit einer Flüssigkeit benetzt, kommt es zu einer Erhöhung der Srechungszahl in diesem Bereich, was zu einer Intensitätsverringerung des reflektierten Lichtstrahls an dem Empfänger 15 führt, da die Totalreflexion im Sensorbereich ausbleibt. Die vorliegende Ausführung ermöglicht es, die Signalverarbeitung räumlich getrennt von dem Sensorbereich' 16 durchzuführen.

Die Figur 3 zeigt in einer schematischen Teilschnittansicht eine leicht abgewandelte Ausführungsform, die für den Nachweis verschiedenartiger Substanzen genutzt werden kann. Die Lichtwellenführung erfolgt hierbei in gleicher Weise, wie in der in Figur 2 beschriebenen Ausführung. Der Sensorbereich 16 ist hier mit einer sensoraktiven Substanz 24 beschichtet. Die Gegenwart einer Meßsubstanz, die vorzugsweise als Flüssigkeit, Aerosol, in Lösung oder in gasförmiger Form vorliegt, kann zu einer Änderung der Brechzahl oder der Farbe im Sensorbereich 16 führen. Dieser Effekt kann beispielsweise über eine chemische Reaktion oder Komplexierung erreicht werden. Daraus resultiert wiederum eine Intensitätsänderung des reflektierten Lichtstrahls am Empfänger 15. Der Retroreflektor 10 und ein Träger 22 des Sensormaterials können hierbei zu einer Einheit vereinigt werden.

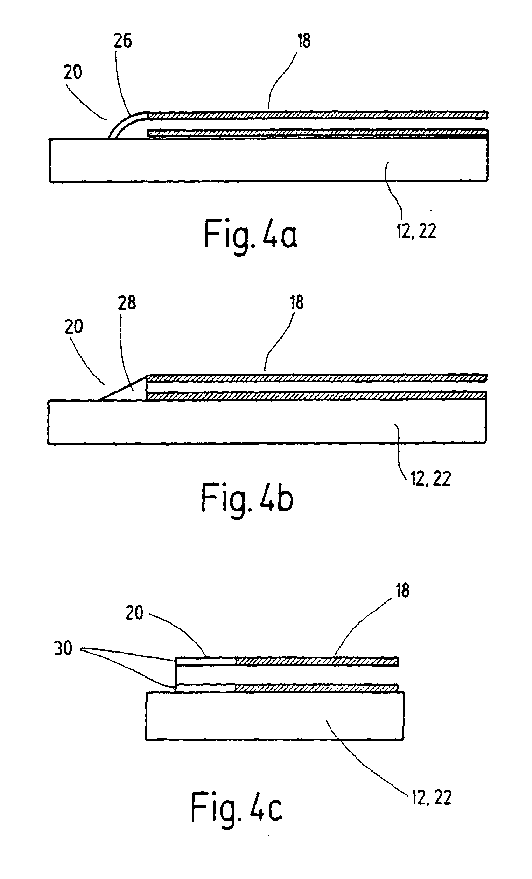

Die Figuren 4a bis 4c zeigen in einer schematischen Schnittansicht drei verschiedene Ausführungsformen des Koppelelementes 20. Das parallel zur Oberfläche des Trägers 22 beziehungsweise der Windschutzscheibe 12 über das lichtführende Element 18 herangeführte Licht wird hier derart reflektiert, daß mindestens der Grenzwinkel der Totalreflexion an der äußeren Grenzfläche erreicht wird. Alternative Ausführungsformen sind dabei ein Krümmer 26 (Figur 4a), ein Prisma 28 (Figur 4b) oder eine Strukturierung 30 des Lichtleiters 18 (Figur 4c) durch Aufrauhung oder Einprägen von gitterartigen Strukturen. Diese Strukturierung kann auf der Unter- oder der Oberseite des Lichtleiter endes angebracht sein, und zwar so, daß sie dem Träger 22 beziehungsweise der Windschutzscheibe 12 zugewandt ist, wobei hier Verluste in der Lichtintensität in Kauf genommen werden müssen.

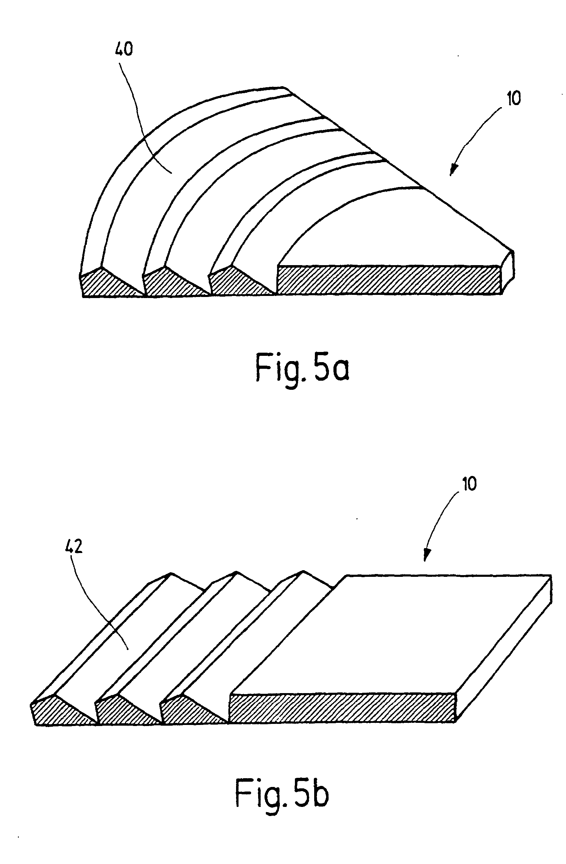

Die Figuren 5a und 5b zeigen in perspektivischen Ansichten des Retroreflektors 10 zwei alternative Ausführungsformen. In Figur 5a sind hierbei die für die Reflexion notwendigen Prismen 40 in kreisförmigen Segmenten angeordnet. Figur 5b weist dagegen eine streifenförmige Anordnung der Prismen 42 auf. Die Abmessung dieser Mikrostrukturen (Prismen) kann dabei vorzugsweise zwischen 2 µm und 100 µm liegen.

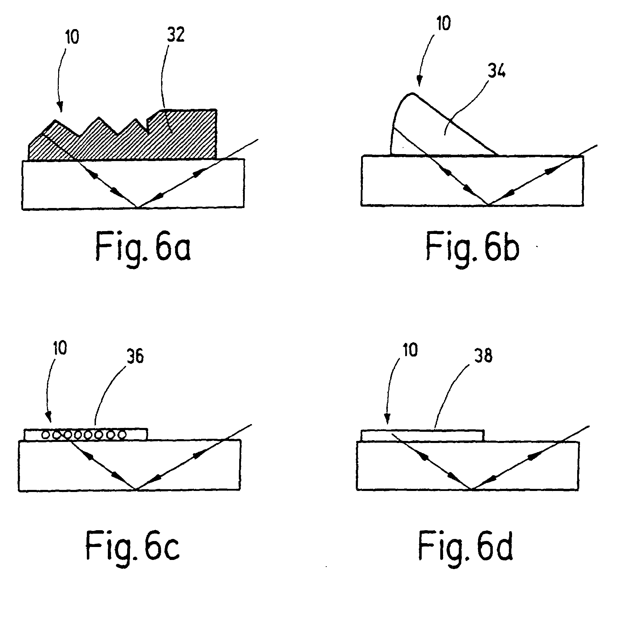

In den Figur 6a bis 6d sind weitere alternative Ausführungen des Retroreflektors in schematischen Schnittansichten dargestellt. Die Figuren 6a und 6b zeigen Spiegeisegmente 32 und Hohlspiegelsegmente 34, die das Licht auf den Auskoppelpunkt fokussieren. Die Spiegelflächen müssen hierbei zumindest teilweise metallisiert werden, und daher ist diese Ausführungsform auf Anwendungen begrenzt, in denen keine Transparenz gefordert ist. Zur Reflexion des Lichtstrahls können auch in einem Kunststoff eingelagerte Glaskugeln 36 oder ein reflektierender Farbstoff genutzt werden, wie es schematisch in Figur 6c dargestellt wird. In Figur 6d erfolgt die Reflexion über ein schematisch dargestelltes Hologramm 38, das als platte, Folie oder flache Glasscheibe aufgebracht wird.

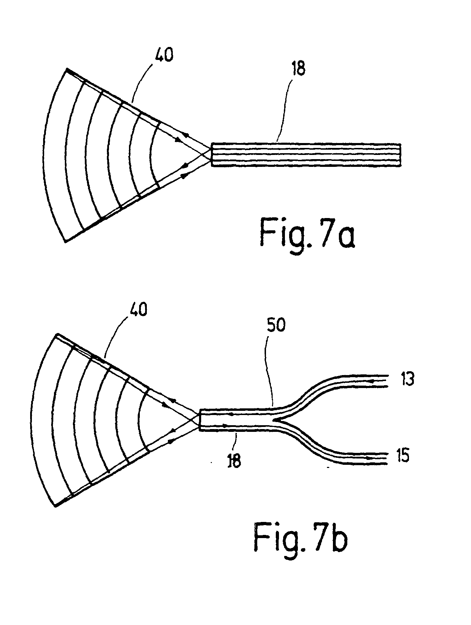

In den Figuren 7a und 7b sind zwei alternative Ausführungen des Lichtleiters 18 dargestellt. Die Zuund Rückführung des Lichtstrahls, der beispielsweise an dem schematisch dargestellten kreissegmentförmigen Retroreflektor reflektiert wird, kann hierbei in zweierlei Weise erfolgen. Entweder liegen getrennte Lichtleiter 18 vor, die neben- oder übereinander angeordnet sind (Figur 7a), oder der Lichtstrahl wird über einen gemeinsamen Lichtleiter zum Koppelelement 20 geleitet, wobei vor dem Sender 13 bzw. dem Empfänger 15 ein Strahlteiler 50 angeordnet ist.

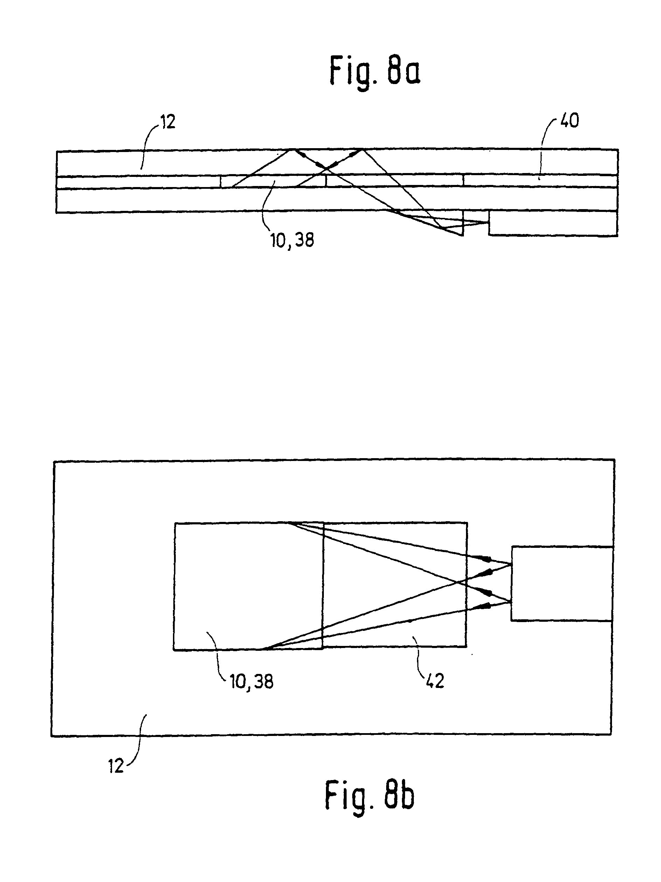

In Fig. 8a ist eine Windschutzscheibe 12 im Schnitt und in Figur 8b eine Windschutzscheibe 12 in Draufsicht schematisch dargestellt.

Soll als Licht zur Detektion ein infrarotes Licht (IR) verwendet werden, so muß die in der Windschutzscheibe 12 angeordnete IR-undurchlässige Klebefolie 40 im Sensorbereich 16 ausgespart sein, um den Durchtritt des Detektionslichts zu gewährleisten.

In der Windschutzscheibe 12, insbesondere in einem Teil dieser Aussparung 42 befindet sich das Hologramm 38, der übrige Teil bleibt leer oder wird mit einer IR-durchlässiaen Klebefolie ausgefüllt. Das IR-Licht tritt in die Windschutzscheibe 12 ein, wird im IR-durchlässigen Bereich der Aussparung 42 durchgelassen, an der Oberfläche der Windschutzscheibe 12 totalreflektiert, am Hologramm 38 in die Eintrittsrichtung reflektiert und nach nochmaliger Totalreflexion an der Oberfläche der Windschutzscheibe 12 durch den IR-durchlässigen Bereich der Aussparung 42 in den Lichtleiter zurück geleitet.

## Patentansprüche

1. Optischer Sensor zur Erfassung einer Benetzung einer Oberfläche (11), insbesondere einer Kraftfahrzeugscheibe, mit wenigstens einem Sender (13) und wenigstens einem Empfänger (15) für elektromagnetische Wellen, wobei die Oberfläche in einem Sensorbereich (16) zwischen dem wenigstens einen Sender (13) und dem wenigstens einen Empfänger (15) angeordnet ist und die Ausbildung einer Benetzung auf dem Sensorbereich (16) der Oberfläche (11) eine Signaländerung bewirkt, **dadurch gekennzeichnet, daß** der optische Sensor ein lichtführendes Element (18) aufweist, in dem die elektromagnetischen Wellen bidirektional in den Sensorbereich (16) und aus dem Sensorbereich (16) geleitet werden, wobei im Sensorbereich (16) ein Retroreflektor (10) so angeordnet ist, daß er die von der Oberfläche (11) reflektierten elektromagnetischen Wellen zur Oberfläche (11) und von dort zum lichtführenden Element (18) zurückführt.

2. Optischer Sensor nach Anspruch 1, **dadurch gekennzeichnet, daß** das lichtführende Element (18) ein Lichtwellenleiter ist, der insbesondere aus Glas oder Kunststoff besteht.

3. Optischer Sensor nach Anspruch 2, **dadurch gekennzeichnet, daß** das lichtführende Element (18) einen einzelnen Lichtwellenleiter oder ein Bündel von Lichtwellenleitern aufweist.

4. Optischer Sensor nach einem der vorhergehenden Ansprüche, **dadurch gekennzeichnet, daß** das lichtführende Element (18) ein mono- oder multimodiger Lichtwellenleiter ist.

5. Optischer Sensor nach einem der vorhergehenäen Ansprüche, **dadurch gekennzeichnet, daß** das lichtführende Element (18) eine Platte oder ein anderer geeignet geformter Körper ist, der das Licht führen kann.

6. Optischer Sensor nach einem der vorhergehenden Ansprüche, **dadurch gekennzeichnet, daß** das lichtführende Element (18) getrennte Lichtwellenleiter für die Zu- und Rückführung der elektromagnetischen Wellen aufweist.

7. Optischer Sensor nach Anspruch 1, **dadurch gekennzeichnet, daß** der Retroreflektor (10) aus Prismen (40, 42) gebildet wird.

8. Optischer Sensor nach Anspruch 1, **dadurch gekennzeichnet, daß** der Retroreflektor (10) aus Spiegelsegmenten (32) oder Hohlspiegelsegmenten (34) gebildet wird.

9. Optischer Sensor nach Anspruch 1, **dadurch gekennzeichnet, daß** der Retroreflektor (10) aus einem als Platte oder Folie bestehenden Hologramm (38) gebildet wird.

10. Optischer Sensor nach Anspruch 1, **dadurch gekennzeichnet, daß** der Retroreflektor (10) aus in Kunststoff . gelagerten Glaskugeln oder einem reflektierenden Farbstoff gebildet wird.

11. Optischer Sensor nach einem der vorhergehenden Ansprüche 7 bis 10, **dadurch gekennzeichnet, daß** die Anordnung der reflektierenden Segmente des Retroreflektors (10) kreissegmentförmig oder streifenförmig ist.

12. Optischer Sensor nach einem der vorhergehenden Ansprüche 7 bis 11, **dadurch gekennzeichnet, daß** der Retroreflektor (10) aus einem optisch transparenten Material. geformt wird.

13. Optischer Sensor nach einem der vorhergehenden Ansprüche 1 bis 6, **dadurch gekennzeichnet, daß** das lichtführende Element (18) ein Koppelelement (20) aufweist, mittels dem eine Umlenkung der elektromagnetischen Wellen auf den Sensorbereich (16) erfolgt.

14. Optischer Sensor nach Anspruch 13, **dadurch gekennzeichnet, daß** das Koppelelement (20) aus einem Krümmer (26), Prisma (28) oder durch Strukturierung (30) der Oberfläche des lichtführenden Elementes gebildet wird.

15. Optischer Sensor nach Anspruch 1, **dadurch gekennzeichnet, daß** eine sensoraktive Substanz (24) im Sensorbereich (16) aufgebracht wird, die in Gegenwart einer Meßsubstanz ihre Brechungszahl oder Farbe ändert.

16. Optischer Sensor nach Anspruch 1, **dadurch gekennzeichnet, daß** das Koppelelement (20) und das lichtführende Element (18) eine Baueinheit bilden.

17. Optischer Sensor nach Anspruch 15, **dadurch gekennzeichnet, daß** der Retroreflektor (10) und ein Träger (22) der Meßsubstanz (24) eine Baueinheit bilden.

18. Verwendung eines optischen Sensors nach einem der Ansprüche 1 bis 14 als Regensensor an Kraftfahrzeugen.

19. Verwendung eines optischen Sensors nach einem der Ansprüche 15 bis 17 als Sensor für verschiedenartige Substanzen, die als Flüssigkeit, Aerosol, in Lösung oder in gasförmiger Form vorliegen.

20. Optischer Sensor nach Anspruch 1, **dadurch gekennzeichnet, daß** der Retroreflektor (10) innerhalb einer Windschutzscheibe (12) angeordnet ist.

21. Optischer Sensor nach Anspruch 9, **dadurch gekennzeichnet, daß** das Hologramm (38) innerhalb einer Windschutzscheibe (12) angeordnet ist.

22. Optischer Sensor nach Anspruch 21, **dadurch gekennzeichnet, daß** die in der Windschutzscheibe (12) angeordnete Klebefolie (40) zumindest teilweise selbst als Hologramm (38) ausgebildet ist.

## Claims

1. Optical sensor for sensing wetting of a surface (11), in particular of a motor vehicle windscreen, with at least one transmitter (13) and at least one receiver (15) for electromagnetic waves, the surface being arranged in a sensor region (16) between the at least one transmitter (13) and the at least one receiver (15) and the formation of wetting on the sensor region (16) of the surface (11) bringing about a change in signal, **characterized in that** the optical sensor has a light-guiding element (18), in which the electromagnetic waves are bidirectionally directed into the sensor region (16) and out of the sensor region (16), a retroreflector (10) being arranged in the sensor region (16) in such a way that it guides the electromagnetic waves that are reflected by the surface (11) to the surface (11) and from there to the light-guiding element (18).

2. Optical sensor according to Claim 1, **characterized in that** the light-guiding element (18) is an optical waveguide, which consists in particular of glass or plastic.

3. Optical sensor according to Claim 2, **characterized in that** the light-guiding element (18) has an individual optical waveguide or a bundle of optical waveguides.

4. Optical sensor according to one of the preceding claims, **characterized in that** the light-guiding element (18) is a monomode or multimode optical waveguide.

5. Optical sensor according to one of the preceding claims, **characterized in that** the light-guiding element (18) is a plate or some other suitably shaped body which can guide the light.

6. Optical sensor according to one of the preceding claims, **characterized in that** the light-guiding element (18) has separate optical waveguides for the supply and return of the electromagnetic waves.

7. Optical sensor according to Claim 1, **characterized in that** the retroreflector (10) is formed by prisms (40, 42).

8. Optical sensor according to Claim 1, **characterized in that** the retroreflector (10) is formed by mirror segments (32) or hollow mirror segments (34).

9. Optical sensor according to Claim 1, **characterized in that** the retroreflector (10) is formed by a hologram (38) taking the form of a plate or film.

10. Optical sensor according to Claim 1, **characterized in that** the retroreflector (10) is formed by glass beads mounted in plastic or by a reflective dye.

11. Optical sensor according to one of the preceding Claims 7 to 10, **characterized in that** the arrangement of the reflecting segments of the retroreflector (10) is in the form of segments of a circle or in the form of strips.

12. Optical sensor according to one of the preceding Claims 7 to 11, **characterized in that** the retroreflector (10) is formed from an optically transparent material.

13. Optical sensor according to one of the preceding Claims 1 to 6, **characterized in that** the light-guiding element (18) has a coupling element (20), by means of which a deflection of the electromagnetic waves onto the sensor region (16) takes place.

14. Optical sensor according to Claim 13, **characterized in that** the coupling element (20) is formed by a bend (26) or prism (28) or by structuring (30) of the surface of the light-guiding element.

15. Optical sensor according to Claim 1, **characterized in that** a sensor-active substance (24) which changes its refractive index or colour in the presence of a substance being measured is applied in the sensor region (16).

16. Optical sensor according to Claim 1, **characterized in that** the coupling element (20) and the light-guiding element (18) form a structural unit.

17. Optical sensor according to Claim 15, **characterized in that** the retroreflector (10) and a support (22) of the substance being measured (24) form a structural unit.

18. Use of an optical sensor according to one of Claims 1 to 14 as a rain sensor on motor vehicles.

19. Use of an optical sensor according to one of Claims 15 to 17 as a sensor for various types of substances which are in the form of a liquid, aerosol, solution or gas.

20. Optical sensor according to Claim 1, **characterized in that** the retroreflector (10) is arranged inside a windscreen (12).

21. Optical sensor according to Claim 9, **characterized in that** the hologram (38) is arranged inside a windscreen (12).

22. Optical sensor according to Claim 21, **characterized in that** the adhesive film (40) arranged in the windscreen (12) is at least partly formed itself as a hologram (38).

## Revendications

1. Détecteur optique pour la détection du mouillage d'une surface (11), en particulier d'une vitre de véhicule automobile, avec au moins un émetteur (13) et au moins un récepteur (15) pour des ondes électromagnétiques, la surface étant disposée dans une zone de détection (16) entre l'au moins un émetteur (13) et l'au moins un récepteur (15), et la formation d'un mouillage sur la zone de détection (16) de la surface (11) provoquant une variation du signal,
**caractérisé en ce que**
le détecteur optique comporte un élément photoconducteur (18), dans lequel les ondes électromagnétiques sont conduites de façon bidirectionnelle dans la zone de détection (16) et hors de la zone de détection (16), un rétroréflecteur (10) étant disposé dans la zone de détection (16) de telle façon qu'il renvoie les ondes électromagnétiques réfléchies par la surface (11) vers la surface (11) et de là vers l'élément photoconducteur (18).

2. Détecteur optique selon la revendication 1,
**caractérisé en ce que**
l'élément photoconducteur (18) est un guide d'ondes lumineuses, qui se compose en particulier de verre ou de matière plastique.

3. Détecteur optique selon la revendication 2,
**caractérisé en ce que**
l'élément photoconducteur (18) comporte un seul guide d'ondes lumineuses ou un faisceau de guides d'ondes lumineuses.

4. Détecteur optique selon l'une quelconque des revendications précédentes,
**caractérisé en ce que**
l'élément photoconducteur (18) est un guide d'ondes lumineuses à mode unique ou multiple.

5. Détecteur optique selon l'une quelconque des revendications précédentes,
**caractérisé en ce que**
l'élément photoconducteur (18) est une plaque ou un autre corps de forme appropriée, qui peut conduire la lumière.

6. Détecteur optique selon l'une quelconque des revendications précédentes,
**caractérisé en ce que**
l'élément photoconducteur (18) comprend des guides d'ondes lumineuses séparés pour l'aller et pour le retour des ondes électromagnétiques.

7. Détecteur optique selon la revendication 1,
**caractérisé en ce que**
le rétroréflecteur (10) est formé de prismes (40, 42).

8. Détecteur optique selon la revendication 1,
**caractérisé en ce que**
le rétroréflecteur (10) est formé de segments de miroir (32) ou de segments de miroir creux (34).

9. Détecteur optique selon la revendication 1,
**caractérisé en ce que**
le rétroréflecteur (10) est formé d'un hologramme (38) existant sous forme de plaque ou de feuille.

10. Détecteur optique selon la revendication 1,
**caractérisé en ce que**
le rétroréflecteur (10) est formé de billes de verre enrobées dans une matière plastique ou d'un colorant réfléchissant.

11. Détecteur optique selon l'une quelconque des revendications précédentes 7 à 10,
**caractérisé en ce que**
l'agencement des segments réfléchissants du rétroréflecteur (10) est en forme de segment de cercle ou en forme de bande.

12. Détecteur optique selon l'une quelconque des revendications précédentes 7 à 11,
**caractérisé en ce que**
le rétroréflecteur (10) est formé en une matière optiquement transparente.

13. Détecteur optique selon l'une quelconque des revendications précédentes 1 à 6,
**caractérisé en ce que**
l'élément photoconducteur (18) comporte un élément de couplage (20), au moyen duquel il se produit une déviation des ondes électromagnétiques vers la zone de détection (16).

14. Détecteur optique selon la revendication 13,
**caractérisé en ce que**
l'élément de couplage (20) est formé par un coude (26), un prisme (28) ou par structuration (30) de la surface de l'élément photoconducteur.

15. Détecteur optique selon la revendication 1,
**caractérisé en ce que**
l'on a déposé dans la zone de détection (16) une substance détectrice active (24), qui modifie son indice de réfraction ou sa couleur en présence d'une substance de mesure.

16. Détecteur optique selon la revendication 1,
**caractérisé en ce que**
l'élément de couplage (20) et l'élément photoconducteur (18) forment une unité structurelle.

17. Détecteur optique selon la revendication 15,
**caractérisé en ce que**
le rétroréflecteur (10) et un support (22) de la substance de mesure (24) forment une unité structurelle.

18. Utilisation d'un détecteur optique selon l'une quelconque des revendications 1 à 14, comme détecteur de pluie dans des véhicules automobiles.

19. Utilisation d'un détecteur optique selon l'une quelconque des revendications 15 à 17, comme détecteur de différentes substances, qui se présentent sous forme de liquide, d'aérosol, en solution ou sous forme gazeuse.

20. Détecteur optique selon la revendication 1,
**caractérisé en ce que**
le rétroréflecteur (10) est disposé à l'intérieur d'un pare-brise (12).

21. Détecteur optique selon la revendication 9,
**caractérisé en ce que**
l'hologramme (38) est disposé à l'intérieur d'un pare-brise (12).

22. Détecteur optique selon la revendication 21,
**caractérisé en ce que**
la feuille adhésive (40) disposée dans le pare-brise (12) est au moins en partie formée en un hologramme (38).
